Europäisches Patentamt

European Patent Office

Office européen des brevets

(11) Publication number: **0 170 235
B1**

## (12) EUROPEAN PATENT SPECIFICATION

(45) Date of publication of patent specification: **27.09.89**

(21) Application number: **85109469.8**

(22) Date of filing: **27.07.85**

(51) Int. Cl.⁴: **C 08 F 6/12,** B 29 B 13/06 // C08L33/24

(54) Continuous drying of poly(2-acrylamido-2-methylpropanesulfonic acid) and salts thereof.

(30) Priority: **31.07.84 US 636646**

(43) Date of publication of application:
**05.02.86 Bulletin 86/06**

(45) Publication of the grant of the patent:
**27.09.89 Bulletin 89/39**

(84) Designated Contracting States:
**AT BE CH DE FR GB IT LI NL**

(56) References cited:
**FR-A-1 536 863
FR-A-1 548 118
GB-A- 804 535
US-A-3 931 089**

(73) Proprietor: **HENKEL CORPORATION
7900 West 78th Street
Minneapolis Minnesota 55435 (US)**

(72) Inventor: **Flanagan, Constance M.
1223 5th Street
Northeast Minneapolis Minnesota 55413 (US)**

(74) Representative: **von Kreisler, Alek, Dipl.-Chem. et al
Deichmannhaus am Hauptbahnhof
D-5000 Köln 1 (DE)**

**Description**

This invention relates to a method of continuous drying of certain acrylic polymers. More particularly, this invention relates to the drum drying or heated extrusion drying of poly(2-acrylamido-2-methylpropanesulfonic acid) or its salts.

U.S. Patent 3,931,089 discloses that a homopolymer of 2-acrylamido-2-methylpropanesulfonic acid or its salts is useful as a stable thickener in highly acidic aqueous solutions. U.S. Patent 4,065,422 discloses that homopolymers of salts of 2-acrylamido-2-methylpropanesulfonic acid impart lubricity to alcohol based compositions. These homopolymers are prepared by the redox polymerization of the monomer in aqueous solution.

The homopolymerization of the monomer in aqueous solution yields a viscous aqueous composition that is dried to obtain the homopolymer. Previous methods of drying the homopolymer having been limited to batch methods whereby a thin layer of the homopolymer was spread on trays and freeze-dried, air-dried, or vacuum-oven dried. When dry, the hardened layer was loosened from the tray and then ground to obtain a glossy crystalline product having a relatively large particle size.

An article in Kirk-Othmer, Encyclopedia of Chemical Technology, Vol. 8, page 108 (3rd ed., 1979, John Wiley & Sons, New York, NY) discloses that drum drying has been used to produce acceptable milk powders. Drum drying is effected by applying a thin film of slurry or solution to the outer surface of a rotating heated drum by means of applicator rolls, spray nozzles, or by dipping the drum into a pan containing the liquid. The dried product is removed from the back side of the drum by a spring-loaded doctor knife.

GB—A—804 535 relates to the isolation of chlorosulfonated polymer of ethylene from fluid solutions thereof in carbon tetrachloride. A film or a fluid solution of a chlorosulfonated polymer of ethylene in tetrachloride is applied to a moving smooth inert metal surface which is maintained at a temperature between 100 and 200°C and under ambient pressure not greater than atmospheric pressure. The film of polymer becomes greatly expanded and the dried film is quite porous. When the films are dryed, they are easily stripped from the hot metal surfaces in the form of continuous, porous, reticulate, self-supporting sheets, which can be handled mechanically in a variety of ways. Thus, the films can be converted into compact form suitable for packaging and storage and convenient for final processing into articles of manufacture.

It is an object of the present invention to provide a continuous method for the drying of homopolymers of 2-acrylamido-2-methylpropanesulfonic acid or salts thereof, which can be immediately packaged for a variety of uses.

This invention relates to the continuous drying of homopolymers of 2-acrylamido-2-methylpropanesulfonic acid or salts thereof. It has been found that the method of continuous drying of these homopolymers, as disclosed herein, yields a sufficiently dried homopolymer that has a smaller particle size than that produced by previous drying methods.

The continuous drying of the homopolymer is accomplished by continuously feeding a solution of the homopolymer into a heating zone in which at least a portion of the solution is in contact with a metal surface that is in motion about an axis and then continuously collecting dried homopolymer at a distance from the point of feed.

The preferred means of continuous drying are drum drying and drying by heated extrusion. In a drum dryer, the metal surface is the exterior of the drum and the heating zone is the volume of space occupied by the thin layer of solution of the homopolymer applied to the drum. In an extruder, the metal surface is the flange of an extruder screw and the heating zone is the volume of space within the extruder that is occupied by the solution of the homopolymer. The motion of the metal surface about an axis moves the homopolymer solution, as it is heated, to a point distant from the point of feed, allowing for continuous introduction of homopolymer and removal of same from the heating zone.

Homopolymers of acrylamidomethylpropanesulfonic acid or salts thereof are prepared by the redox polymerization of the monomer in aqueous solution as disclosed in U.S. Patent No's. 3,931,089 and 4,065,422. These homopolymers have molecular weights in the range of one million to five million and form viscous aqueous solutions. When a drum dryer is used to dry a homopolymer in accordance with this invention, the concentration of the homopolymer in the viscous solutions ranges from 5% to 75% by the weight of the solution. The concentration of the homopolymer to be dried by a drum dryer preferably ranges from about 15% to about 45% and most preferably from about 15% to about 25%. When an extruder is used to dry a homopolymer in accordance with this invention, the concentration of the homopolymer generally ranges from 15% to 75%, preferably from about 25% to about 75% and most preferably from about 50% to about 75%.

The homopolymer of the acid form of acrylamidomethylpropanesulfonic acid is highly acidic. Because the acid form of the homopolymer is highly acidic, the surfaces of a drum dryer or extruder in contact with the homopolymer are preferably constructed of corrosion resistant materials. In the alterative, i.e. if the metal surfaces of the drum dryer or extruder used in the method of this invention are susceptible to corrosion, it is preferred that a homopolymer of a salt of the acid be dried in accordance with the method of this invention. Sutiable salts include the alkali metal salts, e.g. sodium and potassium, the ammonium salt, and the organic amine salts, e.g. monoethanolamine, diethanolamine, and triethanolamine.

2

The preferred means of continuously drying the solutions of homopolymers in accordance with this invention are drum drying and drying by heated extrusion.

As noted earlier, drum drying is effected by applying a thin film of solution of the homopolymer to the outer surface of a rotating heated drum. Because of the relatively high viscosity of the homopolymer solutions, the solution is preferably applied to the drum by means of applicator rolls or by dipping the drum into a pan containing the solution. The drum rotational speed and temperature is selected such that sufficient drying has occurred after only a few seconds whereupon the dried homopolymer can be removed from the drum. For example, with a drum having a diameter of 1 meter the rotational speeds may range from about 3 rpm to about 8 rpm and the drum temperature may range from about 160°C to about 174°C. The preferred method of removing the dried homopolymer from the drum is by the use of a spring-loaded doctor knife.

Single, twin, and double-drum dryers can be used. A twin drum dryer consists of two single drums operated in parallel, usually with a common feed system. On a double-drum dryer, the feed is retained and partially concentrated in the reservoir formed by the nip between the drums. The clearance between the drums is adjusted to control the film thickness. Liquid is conveyed through the clearance, dried, and the product is removed from the back sides of the drums, preferably by doctor knives.

It has been found that the drum drying of the solutions of homopolymers of this invention generally yields a dried granular material that contains from 3% to 6% water.

Drying by heated extrusion has also been found to be effective in the practice of this invention. Heated extrusion drying is effected by continuously feeding a solution of the homopolymer into the inlet of an extruder fitted with a heated barrel and continuously collecting the dried homopolymer as it exits the extruder. The extruder may be a single or twin screw extruder fitted with a barrel that may be heated to maintain a barrel temperature between 75°C and 300°C, preferably between about 100°C and about 200°C and most preferably between about 100°C and about 150°C. The heated barrel heats the contents of the extruder to volatilize the solvent contained in the homopolymer solution. The extruder barrel may be vented to allow the escape of the solvent of the solution of homopolymer. If the extruder barrel is not vented, the solvent is volatilized, e.g. flash evaporated, from the homopolymer as it leaves the extruder barrel. The extruder outlet may also be fitted with a dieface cutter to cut the extrudate into the desired lengths. The precise specifications and operating procedures of the extruder will depend upon the desired rate of output and the desired degree of dryness of the dried homopolymer.

Because of the relatively small particle size of the dried product produced by the practice of this invention, the dried product can be immediately packaged for a variety of uses, thereby removing the necessity of further mechancial processing, e.g. grinding, before packaging. The dried product so produced is useful in a variety of applications. For example, it can be added to a variety of liquid compositions, especially aqueous compositions, as a thickening agent.

## EXAMPLES

### Example 1

A small sample of an aqueous solution containing 15% by weight of poly(acrylamidomethylpropanesulfonic acid) was diluted to 0.5% by weight polymer. The dilute solution exhibited a Brookfield viscosity (#2) at about 25°C of 304 mPas (cps) at 2.5 rpm and 224 mPas (cps) at 20 rpm and a pH of 1.1. The remainder was poured into the nip of a Laboratory Double Drum Dryer available from Buflovak having 15.4 by 19.4 cm (6" by 7⅝") chrome plated rolls. The clearance between the drum rolls was pre-set to approximately 0.1 cm (.004") and steam pressure was held at about 27.6 bar (40 psi).

The dried product was doctored from the back sides of the rolls and collected in trays. The dried product contained between 4% and 5% moisture.

An aqueous solution of 0.5% by weight, on a moisture-free basis, of the dried poly(acrylamidomethylpropanesulfonic acid) was prepared by dissolving the dried product in water. The resulting aqueous solution exhibited, after two hours, a Brookfield viscosity (#2) at 22°C of 256 mPas (cps) at 2.5 rpm and 202 mPas (cps) at 20 rpm and a pH of 2.1. After 24 hours, the solution exhibited a Brookfield viscosity (#2) at 23°C of 208 mPas (cps) at 2.5 rpm and 160 mPs (cps) at 20 rpm and a pH of 2.3.

### Example II

A 15% aqueous solution of poly(sodium acrylamidomethylpropanesulfonate), having characteristics similar to the solution of Example I, was dried using the same equipment and procedures as in Example I. Three dried samples were collected and were dissolved in water to prepare aqueous solutions having 0.5% polymer by weight on a moisture-free basis. The water content of the dried product, the Brookfield viscosity at 22°C one hour after solution, the Brookfield viscosity at 20°C twenty-four hours after solution, and the pH at one hour after solution are tabulated below:

# EP 0 170 235 B1

## 0.5% Aqueous Solution of Dried Poly(sodium acrylamidomethylpropanesulfonate)

| Sample | Moisture % | pH | rpm | 1 hr | 24 hr |
|---|---|---|---|---|---|
| 1 | 5.9 | 6.22 | 2.5 | 416 | 464 |
| | | | 20 | 284 | 300 |
| 2 | 5.6 | 6.16 | 2.5 | 400 | 448 |
| | | | 20 | 278 | 292 |
| 3 | 5.6 | 6.20 | 2.5 | 400 | 432 |
| | | | 20 | 274 | 290 |

## Example III

A small sample of an aqueous solution of 17.2% of poly(ammonium acrylamidomethylpropanesulfonate) was diluted to 0.5% by weight polymer. The resulting dilute solution had a pH of 6.41 and Brookfield viscosities (#2) at both one hour and 24 hours after dilution of 816 mPas (cps) at 2.5 rpm and 434 mPas (cps) at 20 rpm.

The remainder of the 17.2% aqueous solutions was split into two portions which were dried separately. One portion was fed via a spray bar system of the dryer to the drum of a single drum dryer having a 1 meter by 1 meter drum, available from Gouda, the spray bar fed maerial to the second and third nips and polymer was scraped back to fill the fourth and fifth nips. Feed overflowed onto the front nip. The dried product was doctored off the back of the drum to yield a solid material having 4.5% moisture. A 0.5% aqueous solution (on a moisture-free basis) of the dried product exhibited a pH of 5.13, one hour solution viscositites of 544 mPas (cps) at 2.5 rpm and 326 mPas (cps) at 20 rpm and 24 hour solution viscosities of 528 mPas (cps) at 2.5 rpm and 320 mPas (cps) at 20 rpm.

The other portion of the 17.2% aqueous solution was dried on the same apparatus by feeding solution to all four nips at the same time by oscillating the means of feed. The nips were kept full and the speed of the drum was gradually increased from 3 rpm to 8 rpm. This procedure produced double sheeted material and much dusting of the material. The dried product had a moisture content of 3.9%. A 0.5.% (moisture-free basis) aqueous solution had a pH of 5.03, one hour solution viscosities of 560 mPas (cps) at 2.5 rpm and 338 mPas (cps) at 20 rpm and 24 hour viscosities of 544 mPas (cps) at 2.5 rpm and 332 mPas (cps) at 20 rpm.

## Example IV

A 15% solution of poly(acrylamidomethylpropanesulfonic acid), having characteristics similar to the polymer of Example I, was fed into the inlet of a Type 150 24 extruder available from Modern Plastics having a barrel heated to 100°C. Solution was placed in the inlet port prior to the start of screw rotation to lubricate the screw. The screw speed was kept slightly below 1 rpm.

Material was collected from the outlet of the barrel which was not fitted with a die. Upon exiting the extruder, the material flash evaporated a portion of the water to reduce the moisture content by about 7% on a single pass through the extruder. Multiple passes or venting of the extruder will allow for the production of dried material similar to that produced by drum drying.

## Claims

1. A method of continuously drying a homopolymer of 2-acrylamido-2-methylpropanesulfonic acid, or a homopolymer of a salt thereof, which comprises:

a) continuously feeding a solution of the homopolymer having a solids concentration from 5% to 75% by weight into a heating zone in which at least a portion of the solution is in contact with a metal surface that is in motion about an axis; and held at a temperature between 75 and 300°C and

b) then continuously collecting the dried homopolymer containing from 3 to 6% water at a distance from the point of feed.

2. A method in accordance with claim 1 wherein the metal surface is the exterior surface of a drum dryer, and is heated to a temperature between 160°C and 174°C.

3. A method in accordance with claim 1 wherein the metal surface is a flange of an extruder screw in an extruder having a heated barrel and is heated to a temperature between about 75°C and about 300°C.

4. A method in accordance with claim 3 wherein the concentration of the homopolymer in the solution ranges from 15% to 75% by weight.

5. A method in accordance with claim 1 wherein the solution of the homopolymer is an aqueous solution of poly(2-acrylamido-2-methylpropanesulfonic acid).

6. A method in accordance with claim 1 wherein the solution of the homopolymer is an aqueous solution of a poly(2-acrylamido-2-methylpropanesulfonate).

7. A method in accordance with claim 5 wherein the acid is in the form of the ammonium salt.

**Patentansprüche**

1. Verfahren zum kontinuierlichen Trocknen eines Homopolymers von 2-Acrylamido-2-methylpropan-sulfonsäure oder eines Homopolymers eines Salzes derselben, umfassend

a) das kontinuierliche Einführen einer Lösung des Homopolymers mit einer Feststoff-Konzentration von 5 Gew.-% bis 75 Gew.-% in eine Beheizungszone, in der wenigstens ein Teil der Lösung in Kontakt mit einer Metall-Oberfläche steht, die sich in Bewegung um eine Achse befindet und auf einer Temperatur zwischen 75°C und 300°C gehalten wird, und

b) danach das kontinuierliche Sammeln des getrockneten, 3 bis 6% Wasser enthaltenden Homopolymers in einem Abstand vom Ort des Einführens.

2. Verfahren nach Anspruch 1, worin die Metall-Oberfläche die äußere Oberfläche eines Walzentrockners ist und auf eine Temperatur zwischen 160°C und 174°C erhitzt wird.

3. Verfahren nach Anspruch 1, worin die Metall-Oberfläche ein Flansch einer Extruder-Schnecke eines Extruders mit beheiztem Zylinder ist und auf eine Temperatur zwischen etwa 75°C und etwa 300°C erhitzt wird.

4. Verfahren nach Anspruch 3, worin die Konzentration des Homopolymers in der Lösung im Bereich von 15 Gew.-% bis 75 Gew.-% liegt.

5. Verfahren nach Anspruch 1, worin die Lösung des Homopolymers eine wäßrige Lösung von Poly(2-acrylamido-2-methylpropansulfonsäure) ist.

6. Verfahren nach Anspruch 1, worin die Lösung des Homopolymers eine wäßrige Lösung eines Poly(2-acrylamido-2-methylpropansulfonats) ist.

7. Verfahren nach Anspruch 5, worin die Säure in Form des Ammonium-Salze vorliegt.

**Revendications**

1. Procédé de sechage en continu d'un homopolymère de l'acide 2-acrylamido-2-méthylpropane-sulfonique ou d'un homopolymere d'un sel de celui-ci, qui comprend:

a) l'introduction en continu d'une solution de l'homopolymère ayant une concentration en solides 5% à 75% en poids dans une zone de chauffage dans laquelle au moins une partie de la solution est en contact avec une surface métallique qui est en mouvement autour d'un axe; et maintenue à une température entre 75 et 300°C et

b) ensuite la collecte en continu de l'homopolymère séché contenant de 3 à 6% d'eau à une distance du point d'introduction.

2. Procédé selon la revendication 1 dans lequel la surface métallique est la surface exterieure d'un secheur à tambour et est chauffée à une température entre 160°C et 174°C.

3. Procédé selon la revendication 1 dans lequel la surface métallique est un rebord d'une vis d'extrudeuse dans une extrudeuse ayant un corps chauffé et est chauffée à une temperature entre environ 75°C et environ 300°C.

4. Procédé selon la revendication 3 dans lequel la concentration de l'homopolymère dans la solution de 15% à 75% en poids.

5. Procédé selon la revendication 1 dans lequel la solution de l'homopolymère est une solution aqueuse d'acide poly(2-acrylamido-2-méthylpropanesulfonique).

6. Procédé selon la revendication 1 dans lequel la solution de l'homopolymère est une solution aqueuse d'un poly(2-acrylamido-2-méthylpropanesulfonate).

7. Procédé selon la revendication 5 dans lequel l'acide est sous la forme du sel d'ammonium.